# FASCICULE DE BREVET EUROPEEN

(11) **EP 3 974 154 B1**
(45) Date de publication et mention de la délivrance du brevet: **19.07.2023**
(21) Numéro de dépôt: 21198083.4
(22) Date de dépôt: 21.09.2021
(51) Int. Cl.: B29C 51/10, B29C 51/12, B29C 51/14, B60N 2/70, B60N 2/00, B60N 2/56, B60N 2/90, B29C 44/14, B29C 44/12, B32B 5/18, B32B 27/06, B32B 27/40

(54) **PROCÉDÉ DE RÉALISATION D'UNE MATELASSURE DE SIÈGE DE VÉHICULE AUTOMOBILE**
VERFAHREN ZUR HERSTELLUNG EINER POLSTERUNG EINES KRAFTFAHRZEUGSITZES
METHOD FOR MANUFACTURING A CUSHION OF A MOTOR VEHICLE SEAT

(30) Priorité: 24.09.2020 FR 2009731
(43) Date de publication de la demande: 30.03.2022
(73) Titulaire: TESCA France, 92977 Paris La Défense Cedex (FR)
(72) Inventeur: GEORGES, Laurent, 75008 Paris (FR)
(74) Mandataire: Sayettat, Julien Christian

(56) Documents cités:
- WO-A1-2017/178713
- DE-C1- 3 506 230
- FR-A1- 2 165 776
- FR-A1- 2 801 831
- FR-A1- 3 071 185
- US-A1- 2004 069 762

## Description

L'invention concerne un procédé de réalisation d'une matelassure de siège de véhicule automobile.

De nombreux procédés ont été proposés pour réaliser une telle matelassure.

Le document FR 3 071 185 A1 divulgue un procédé de réalisation d'une matelassure de siège de véhicule automobile.

Cependant, lorsque la matelassure est pourvue d'éléments fonctionnels - destinés par exemple à apporter des fonctions telles que le massage, le chauffage ou encore la détection de présence d'un passager - son procédé de réalisation peut s'avérer très complexe et coûteux à mettre en oeuvre.

De plus, la matelassure obtenue peut présenter une définition géométrique insatisfaisante et une robustesse insuffisante face aux sollicitations mécaniques ou thermiques à laquelle elle est soumise lors de son utilisation.

L'invention a pour but de pallier ces inconvénients.

A cet effet, l'invention propose un procédé de réalisation d'une matelassure de siège de véhicule automobile, ledit procédé comprenant les étapes suivantes :
- prévoir un conformateur comprenant d'une part une matrice pourvue d'orifices reliés à un dispositif de tirage sous vide et d'autre part un poinçon chauffant,
- prévoir un moule de moulage par injection-réaction (RIM), ledit moule comprenant une cuve et un couvercle définissant une cavité de moulage,
- disposer une coiffe de revêtement souple dans ladite matrice, la face d'aspect de ladite coiffe étant tournée vers ladite matrice,
- recouvrir ladite coiffe d'un film de collage à base de polyuréthanne thermoplastique de point de fusion compris entre 100 et 110°C,
- réaliser une étanchéité périphérique au moyen d'un serre flan prenant appui en périphérie de ladite coiffe,
- actionner ledit dispositif de tirage sous vide pour que ledit film plaque ladite coiffe contre ladite matrice pour épouser sa géométrie,
- disposer une couche de support en mousse souple sur ledit film, ladite couche étant équipée d'au moins un élément fonctionnel de manière à former une couche équipée,
- plaquer ladite couche équipée contre ledit film au moyen dudit poinçon chauffé à température permettant la fusion dudit film pour réaliser une adhésion entre ladite coiffe et ladite couche équipée,
- disposer ladite coiffe pourvue de ladite couche équipée dans ladite cuve et recouvrir ladite couche d'un film de protection agencé pour se dégrader sous l'action de la température et de la pression mises en jeu lors de l'expansion d'une mousse de polyuréthanne élastiquement compressible,
- injecter dans ladite cavité sur ledit film de protection un mélange précurseur de mousse de polyuréthanne élastiquement compressible de manière à former, après expansion de ladite mousse et dégradation dudit film de protection, un bloc de rembourrage surmoulant ladite coiffe pourvue de ladite couche équipée,
- démouler la matelassure obtenue.

La mise en oeuvre d'un tel procédé de fabrication permet de dégager divers avantages :
- la température de fusion relativement élevée du film de collage permet de garantir une adhésion parfaite entre la coiffe et la couche de support, ce qui évite tout risque de décollement en cas d'exposition du véhicule à de hautes températures ou en cas de repassage de la matelassure pour corriger d'éventuels défauts d'aspect,
- le tirage sous vide permet d'assurer que la coiffe épouse parfaitement la géométrie de la matrice, ce qui permet de garantir une géométrie de coiffe conforme à sa définition nominale,
- la présence du film de protection permet de limiter la pénétration de mousse dans la couche équipée et d'éviter le risque de formation d'une croûte néfaste au confort hygrothermique et tactile de la matelassure.

D'autres particularités et avantages de l'invention apparaîtront dans la description qui suit, faite en référence aux figures jointes dans lesquelles :
[Fig.1a] ;

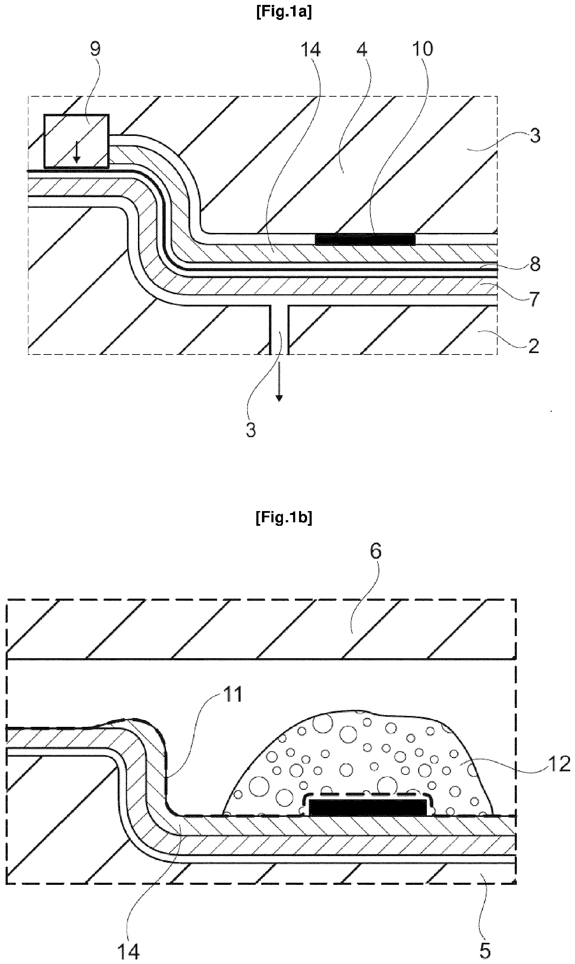

[Fig.1b] ; et

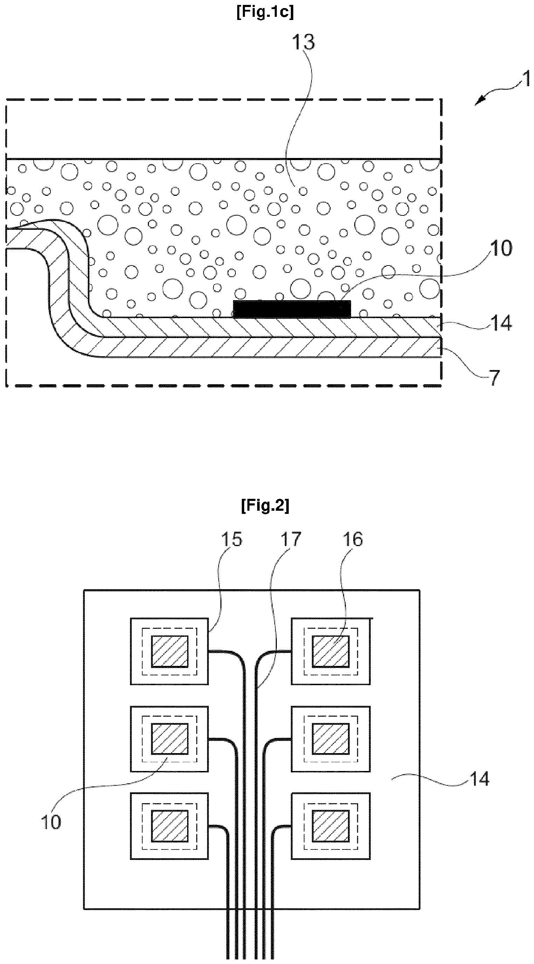

[Fig.1c] représentent en coupe schématique partielle différentes étapes de la fabrication d'une matelassure, la figure 1a représentant la coiffe en cours d'adhésion avec une couche équipée, la figure 1b représentant la coiffe équipée disposée dans un moule juste après injection du mélange précurseur de mousse élastiquement compressible et la figure 1c représentant la matelassure obtenue après démoulage,
[Fig.2] est une vue schématique de face d'une couche équipée pourvue d'une pluralité d'éléments fonctionnels en forme de poches en mousse souple, des coussinets gonflables étant disposés dans lesdites poches, lesdits coussinets étant reliés à des tuyaux destinés à être connectés à un dispositif de gonflement programmé.

En référence aux figures, on décrit un procédé de réalisation d'une matelassure 1 de siège de véhicule automobile, ledit procédé comprenant les étapes suivantes :
- prévoir un conformateur comprenant d'une part une matrice 2 pourvue d'orifices 3 reliés à un dispositif de tirage sous vide et d'autre part un poinçon 4 chauffant,
- prévoir un moule de moulage par injection-réaction (RIM), ledit moule comprenant une cuve 5 et un couvercle 6 définissant une cavité de moulage,
- disposer une coiffe 7 de revêtement souple - par exemple à base de textile ou de cuir pourvu d'une sous-couche de mousse souple - dans ladite matrice, la face d'aspect de ladite coiffe étant tournée vers ladite matrice,
- recouvrir ladite coiffe d'un film de collage 8 à base de polyuréthanne thermoplastique de point de fusion compris entre 100 et 110°C, et notamment compris entre 103 et 107°C,
- réaliser une étanchéité périphérique au moyen d'un serre flan 9 prenant appui en périphérie de ladite coiffe,
- actionner ledit dispositif de tirage sous vide pour que ledit film plaque ladite coiffe contre ladite matrice pour épouser sa géométrie,
- disposer une couche de support 14 en mousse souple - par exemple à base de polyuréthanne - sur ledit film, ladite couche étant équipée d'au moins un élément fonctionnel 10 de manière à former une couche équipée,
- plaquer ladite couche équipée contre ledit film au moyen dudit poinçon chauffé à température permettant la fusion dudit film pour réaliser une adhésion entre ladite coiffe et ladite couche équipée,
- disposer ladite coiffe pourvue de ladite couche équipée dans ladite cuve et recouvrir ladite couche d'un film de protection 11 (tel que décrit par exemple dans les documents FR-3 088 845 et FR-3 054 472) agencé pour se dégrader sous l'action de la température et de la pression mises en jeu lors de l'expansion d'une mousse de polyuréthanne élastiquement compressible,
- injecter dans ladite cavité sur ledit film de protection un mélange précurseur de mousse 12 de polyuréthanne élastiquement compressible de manière à former, après expansion de ladite mousse et dégradation dudit film de protection, un bloc 13 de rembourrage surmoulant ladite coiffe pourvue de ladite couche équipée,
- démouler la matelassure 1 obtenue.

Selon la réalisation représentée en figure 2 :
- la couche de support 14 est pourvue d'une pluralité d'éléments fonctionnels 10 en forme de poches en mousse souple associées à ladite couche de support, lesdites poches présentant chacune une ouverture 15,
- avant mise en place du film de protection 11 sur la couche équipée, des coussinets gonflables 16 sont disposés dans lesdites poches - éventuellement refermées par un dispositif de fermeture, par exemple à base de bandes s'agrippant l'une à l'autre -, lesdits coussinets étant reliés à des tuyaux 17 destinés à être connectés à un dispositif de gonflement programmé, afin de former un système de massage, lesdits tuyaux sortant de la cavité de moulage par au moins un orifice périphérique, non représenté, prévu dans le moule.

Selon une réalisation non représentée, la couche de support 14 est pourvue d'au moins un élément fonctionnel 10 en forme de circuit électrique destiné à former une résistance de chauffage de la matelassure 1.

Selon une réalisation non représentée, la couche de support 14 est pourvue d'au moins un élément fonctionnel 10 en forme de capteur de pression destiné à être intégré à un système de détection de la présence d'un passager sur la matelassure 1.

Selon une réalisation non représentée, la couche de support 14 est pourvue d'éléments fonctionnels 10 de différentes natures, par exemple des poches de réception de coussinets gonflables 16 et une résistance électrique.

Selon une variante non représentée, le procédé prévoit d'associer l'une sur l'autre deux couches de support 14, pourvues d'éléments fonctionnels 10 de différentes natures, au moyen d'un autre film de collage 8 disposé entre lesdites couches, par exemple une première couche avec des poches de réception de coussinets gonflables 16 et deuxième couche avec une résistance électrique.

## Revendications

1. Procédé de réalisation d'une matelassure (1) de siège de véhicule automobile, ledit procédé comprenant les étapes suivantes :
• prévoir un conformateur comprenant d'une part une matrice (2) pourvue d'orifices (3) reliés à un dispositif de tirage sous vide et d'autre part un poinçon (4) chauffant,
• prévoir un moule de moulage par injection-réaction (RIM), ledit moule comprenant une cuve (5) et un couvercle (6) définissant une cavité de moulage,
• disposer une coiffe (7) de revêtement souple dans ladite matrice, la face d'aspect de ladite coiffe étant tournée vers ladite matrice,
• recouvrir ladite coiffe d'un film de collage (8) à base de polyuréthanne thermoplastique de point de fusion compris entre 100 et 110°C,
• réaliser une étanchéité périphérique au moyen d'un serre flan (9) prenant appui en périphérie de ladite coiffe,
• actionner ledit dispositif de tirage sous vide pour que ledit film plaque ladite coiffe contre ladite matrice pour épouser sa géométrie,
• disposer une couche de support (14) en mousse souple sur ledit film, ladite couche étant équipée d'au moins un élément fonctionnel (10) de manière à former une couche équipée,
• plaquer ladite couche équipée contre ledit film au moyen dudit poinçon chauffé à température permettant la fusion dudit film pour réaliser une adhésion entre ladite coiffe et ladite couche équipée,
• disposer ladite coiffe pourvue de ladite couche équipée dans ladite cuve et recouvrir ladite couche d'un film de protection (11) agencé pour se dégrader sous l'action de la température et de la pression mises en jeu lors de l'expansion d'une mousse de polyuréthanne élastiquement compressible,
• injecter dans ladite cavité sur ledit film de protection un mélange précurseur de mousse (12) de polyuréthanne élastiquement compressible de manière à former, après expansion de ladite mousse et dégradation dudit film de protection, un bloc (13) de rembourrage surmoulant ladite coiffe pourvue de ladite couche équipée,
• démouler la matelassure (1) obtenue.

2. Procédé selon la revendication 1, **caractérisé en ce que** :
• la couche de support (14) est pourvue d'une pluralité d'éléments fonctionnels (10) en forme de poches en mousse souple associées à ladite couche de support, lesdites poches présentant chacune une ouverture (15),
• avant mise en place du film de protection (11) sur la couche équipée, des coussinets gonflables (16) sont disposés dans lesdites poches, lesdits coussinets étant reliés à des tuyaux (17) destinés à être connectés à un dispositif de gonflement programmé, afin de former un système de massage, lesdits tuyaux sortant de la cavité de moulage par au moins un orifice périphérique prévu dans le moule.

3. Procédé selon l'une des revendications 1 ou 2, **caractérisé en ce que** la couche de support (14) est pourvue d'au moins un élément fonctionnel (10) en forme de circuit électrique destiné à former une résistance de chauffage de la matelassure (1).

4. Procédé selon l'une quelconque des revendications 1 à 3, **caractérisé en ce que** la couche de support (14) est pourvue d'au moins un élément fonctionnel (10) en forme de capteur de pression destiné à être intégré à un système de détection de la présence d'un passager sur la matelassure (1).

5. Procédé selon l'une quelconque des revendications précédentes, **caractérisé en ce que** la couche de support (14) est pourvue d'éléments fonctionnels (10) de différentes natures.

6. Procédé selon l'une quelconque des revendications précédentes, **caractérisé en ce qu'**il prévoit d'associer l'une sur l'autre deux couches de support (14), pourvues d'éléments fonctionnels (10) de différentes natures, au moyen d'un autre film de collage (8) disposé entre lesdites couches.

## Patentansprüche

1. Verfahren zur Herstellung einer Polsterung (1) eines Kraftfahrzeugsitzes, wobei das Verfahren die folgenden Schritte umfasst:
- Vorsehen einer Formungsvorrichtung, umfassend einerseits eine Matrize (2), die mit Öffnungen (3) versehen ist, die mit einer Vakuum-Zugvorrichtung verbunden sind, und andererseits eine Heißstanze (4),
- Vorsehen einer Form zum Reaktionsspritzgussformen (RIM), wobei die Form einen Behälter (5) und einen Deckel (6) umfasst, die einen Formhohlraum definieren,
- Anordnen einer flexiblen Bezugsabdeckung (7) in der Matrize, wobei die Sichtseite der Abdeckung zur Matrize gewendet ist,
- Überziehen der Abdeckung mit einem Klebefilm (8) auf Basis von thermoplastischem Polyurethan mit einem Schmelzpunkt, der zwischen 100 und 110 °C liegt,
- Realisieren einer umfänglichen Abdichtung anhand eines Niederhalters (9), der sich am Umfang der Abdeckung anlegt,
- Betätigen der Vakuum-Zugvorrichtung, damit der Film die Abdeckung an die Matrize andrückt, um sich deren Geometrie anzupassen,
- Anordnen einer Trägerschicht (14) aus flexiblem Schaumstoff auf dem Film, wobei die Schicht mit mindestens einem Funktionselement (10) ausgerüstet ist, um eine ausgerüstete Schicht zu bilden,
- Andrücken der ausgerüsteten Schicht an den Film anhand der auf eine Temperatur erhitzten Stanze, die das Schmelzen des Filmes erlaubt, um eine Haftung zwischen der Abdeckung und der ausgerüsteten Schicht zu realisieren,
- Anordnen der mit der ausgerüsteten Schicht versehenen Abdeckung in dem Behälter und Abdecken der Schicht mit einem Schutzfilm (11), der ausgeführt ist, um sich unter der Wirkung der Temperatur und des Druckes die beim Expandieren eines elastisch verformbaren Polyurethan-Schaumstoffes eingesetzt werden, zu zersetzen,
- Einspritzen in den Hohlraum auf den Schutzfilm eines Schaumstoff-Vorläufergemisches (12) aus elastisch verformbarem Polyurethan, um nach dem Expandieren des Schaumstoffes und der Zersetzung des Schutzfilms einen Füllungsblock (13) zu bilden, der die mit der ausgerüsteten Schicht versehene Abdeckung anformt,
- Aus der Form nehmen der erhaltenen Polsterung (1).

2. Verfahren nach Anspruch 1, **dadurch gekennzeichnet, dass**:
- Die Trägerschicht (14) mit einer Vielzahl von Funktionselementen (10) in Form von flexiblen Schaumstofftaschen versehen ist, die der Trägerschicht zugeordnet sind, wobei die Taschen jeweils eine Öffnung (15) aufweisen,
- vor Anbringen des Schutzfilms (11) auf der ausgerüsteten Schicht aufblasbare Kissen (16) in den Taschen angeordnet werden, wobei die Kissen mit Schläuchen (17) verbunden sind, die dazu bestimmt sind, mit einer programmierten Aufblasvorrichtung verbunden zu werden, um ein Massagesystem zu bilden, wobei die Schläuche über mindestens eine Umfangsöffnung, die in der Form vorgesehen ist, aus dem Formhohlraum austreten.

3. Verfahren nach einem der Ansprüche 1 oder 2, **dadurch gekennzeichnet, dass** die Trägerschicht (14) mit mindestens einem Funktionselement (10) in Form einer elektrischen Schaltung versehen ist, die dazu bestimmt ist, einen Heizwiderstand für die Polsterung (1) zu bilden.

4. Verfahren nach einem der Ansprüche 1 bis 3, **dadurch gekennzeichnet, dass** die Trägerschicht (14) mit mindestens einem Funktionselement (10) in Form eines Drucksensors versehen ist, der dazu bestimmt ist, in ein Erkennungssystem für die Anwesenheit eines Insassen auf der Polsterung (1) integriert zu werden.

5. Verfahren nach einem der vorstehenden Ansprüche **dadurch gekennzeichnet, dass** die Trägerschicht (14) mit Funktionselementen (10) unterschiedlicher Arten versehen ist.

6. Verfahren nach einem der vorstehenden Ansprüche **dadurch gekennzeichnet, dass** es vorsieht, aufeinander zwei Trägerschichten (14), die mit Funktionselementen (10) unterschiedlicher Arten versehen sind, anhand eines weiteren Klebefilms (8), der zwischen den Schichten angeordnet ist, zuzuordnen.

## Claims

1. Method for manufacturing a cushion (1) of a motor vehicle seat, said method comprising the following steps:
- providing a shaping device comprising, on the one hand, a die (2) provided with orifices (3) connected to a vacuum circulation device and, on the other hand, a heating punch (4),
- providing a reaction injection mould (RIM), said mould comprising a vessel (5) and a lid (6) defining a mould cavity,
- disposing a cover (7) made of a flexible coating in said die, the viewing face of said cover facing said die,
- covering said cover with a thermoplastic polyurethane-based bonding film (8) with a melting point of between 100 and 110°C,
- producing a peripheral seal by means of a blank holder (9) bearing against the periphery of said cover,
- actuating said vacuum circulation device so that said film presses said cover against said die to mould to the geometry thereof,
- disposing a support layer (14) made of flexible foam on said film, said layer being equipped with at least one functional element (10) so as to form an equipped layer,
- pressing said equipped layer against said film by means of said punch heated to a temperature that allows said film to melt to obtain adhesion between said cover and said equipped layer,
- disposing said cover provided with said equipped layer in said vessel and covering said layer with a protective film (11) arranged so as to degrade under the effect of the temperature and pressure involved during the expansion of a resiliently-compressible polyurethane foam,
- injecting a precursor mixture of resiliently-compressible polyurethane foam (12) into said cavity on said protective film so as to form, after said foam has expanded and said protective film has degraded, a block (13) of padding overmoulding said cover provided with said equipped layer,
- removing the cushion (1) obtained from the mould.

2. Method according to claim 1, **characterised in that**:
- the support layer (14) is provided with a plurality of functional elements (10) in the form of flexible foam pockets associated with said support layer, each of said pockets having an opening (15),
- before installing the protective film (11) on the equipped layer, inflatable pads (16) are disposed inside said pockets, said pads being connected to pipes (17) intended to be connected to a programmed inflation device, in order to form a massage system, said pipes emerging from the moulding cavity through at least one peripheral orifice provided in the mould.

3. Method according to one of claims 1 or 2, **characterised in that** the support layer (14) is provided with at least one functional element (10) in the form of an electric circuit intended to form a heating resistor for the cushion (1) .

4. Method according to any one of claims 1 to 3, **characterised in that** the support layer (14) is provided with at least one functional element (10) in the form of a pressure sensor intended to be integrated into a system for detecting the presence of a passenger on the cushion (1) .

5. Method according to any one of the preceding claims, **characterised in that** the support layer (14) is provided with functional elements (10) of different natures.

6. Method according to any one of the preceding claims, **characterised in that** it provides for combining two support layers (14), one on top of the other, which support layers are provided with functional elements (10) of different natures, by means of another bonding film (8) disposed between said layers.
